# EUROPÄISCHE PATENTSCHRIFT

(11) **EP 2 689 432 B1**
(45) Veröffentlichungstag und Bekanntmachung des Hinweises auf die Patenterteilung: **12.09.2018**
(21) Anmeldenummer: 12712229.9
(22) Anmeldetag: 12.03.2012
(51) Int. Cl.: H01F 7/16

(54) **ANTRIEBSEINRICHTUNG FÜR EIN VENTIL, VENTIL ZUR STEUERUNG EINES GAS- UND/ODER FLÜSSIGKEITSSTROMS**
DRIVE DEVICE FOR A VALVE, VALVE FOR CONTROLLING A GAS AND/OR LIQUID FLOW
SYSTÈME D'ACTIONNEMENT POUR UNE VANNE, ET VANNE DESTINÉE À COMMANDER UN FLUX GAZEUX ET/OU LIQUIDE

(30) Priorität: 24.03.2011 DE 102011006071
(43) Veröffentlichungstag der Anmeldung: 29.01.2014
(73) Patentinhaber: Schaeffler Technologies AG & Co. KG, 91074 Herzogenaurach (DE)
(72) Erfinder: SCHÜLER, Ralf, 98530 Wichtshausen (DE); SCHMID, Günter, 90475 Nürnberg (DE)
(86) Internationale Anmeldenummer: PCT/EP2012/054199
(87) Internationale Veröffentlichungsnummer: WO 2012/126751

(56) Entgegenhaltungen:
- EP-A2- 0 955 645
- US-A1- 2010 140 519

## Beschreibung

### Gebiet der Erfindung

Die Erfindung bezieht sich auf eine Antriebseinrichtung für ein Ventil und ein Ventil zur Steuerung eines Gas- und/oder Flüssigkeitsstroms.

### Hintergrund der Erfindung

Herkömmlicherweise sind Ventile mit einer Absperrkörperstange bekannt, an deren einen Ende ein Absperrkörper, wie beispielsweise ein Kolben, eine Kugel usw., befestigt ist. Wird die Absperrkörperstange translatorisch hin und her bewegt, kann das Ventil entweder geöffnet oder geschlossen werden. Solche Ventile finden beispielsweise zur Steuerung von Gas- oder Flüssigkeitsströmen in einem Rohr usw. Verwendung.

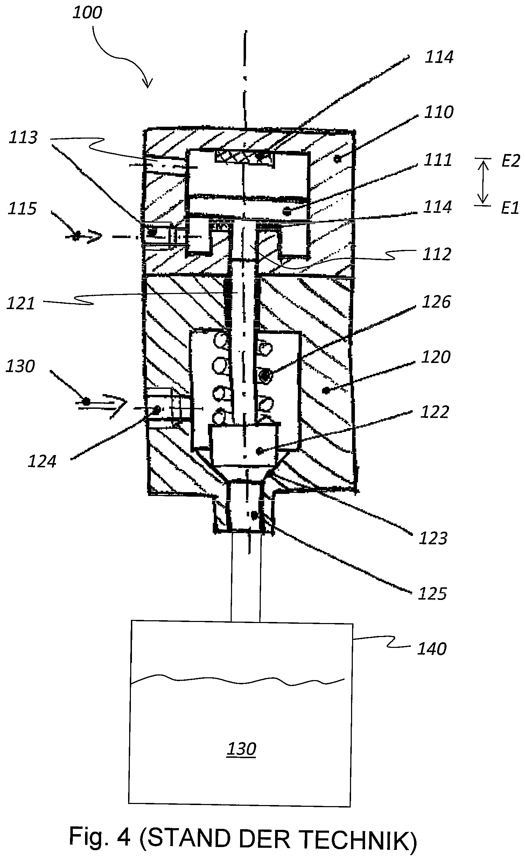

**Fig. 4** zeigt ein Beispiel für ein bekanntes Ventil 100, das einen Pneumatikzylinder 110 und einen Ventilblock 120 umfasst und zur Steuerung eines Gas- oder Flüssigkeitsstromes dient.

Der Pneumatikzylinder 110 umfasst einen Kolben 111, der an einem Ende einer Pneumatikzylinder-Kolbenstange 112 befestigt ist, zwei Lufteintrittsbohrungen 113 und zwei Dämpfungselemente 114. Die zwei Lufteintrittsbohrungen 113 sind in **Fig. 4** übereinander angeordnet. Durch die untere Lufteintrittsbohrung 113 kann Druckluft 115 in den Pneumatikzylinder 110 eingeblasen werden. Jedes der zwei Dämpfungselemente 114 ist an einer von zwei Endlagen E1, E2 des Kolbens 111 angeordnet, zwischen welchen der Kolben 111 und damit die daran befestigte Pneumatikzylinder-Kolbenstange 112 mittels der Druckluft 115 hin und her bzw. translatorisch bewegbar sind.

Der Ventilblock 120 hat eine Ventilblock-Kolbenstange 121, einen Ventilstößel 122, einen Ventilsitz 123, eine Mediumseinlassöffnung 124, eine Mediumsauslassöffnung 125 und eine Druckfeder 126.

Die Ventilblock-Kolbenstange 121 ist mit der Pneumatikzylinder-Kolbenstange 112 derart gekoppelt, dass eine translatorische Bewegung der Pneumatikzylinder-Kolbenstange 112 auch eine translatorische Bewegung der Ventilblock-Kolbenstange 121 bewirkt. Hierzu ist in dem Ventilblock 120 die Druckfeder 126 derart eingebaut, dass im drucklosen Zustand, wenn also der Pneumatikzylinder 110 nicht mit Druckluft 115 beaufschlagt ist, der Ventilstößel 122 am Ventilsitz 123 anliegt und somit die Mediumsauslassöffnung 125 und damit das Ventil 100 schließt. Wird der Pneumatikzylinder 110 durch die Lufteintrittsbohrung 113 mit Druckluft 115 beaufschlagt, so wird der Ventilstößel 122 von dem Ventilsitz 123 angehoben und somit das Ventil 100 geöffnet. Dadurch kann ein an der Mediumseinlassöffnung 124 einströmendes Medium 130 (z.B. Gas und/oder Flüssigkeit) über die Mediumsauslassöffnung 125 in den darunter angeordneten Behälter 140 strömen. Sobald der Behälter 140 ausreichend mit dem Medium 130 befüllt ist, kann das Ventil 100 wieder geschlossen werden.

Bei dem Pneumatikzylinder 110 handelt es sich also um einen einfachwirkenden Zylinder, der mittels Druckluft 115 in die eine Richtung betätigt und im drucklosen Zustand durch die Druckfeder 126 in die zweite Richtung betätigt wird.

Nachteilig an einem solchen pneumatisch betätigten Ventil 100 ist, dass die Schaltzeit mit ca. 0,1 bis 0,3 Sekunden relativ lang ist, dass ständig mit jedem Schaltzyklus ein Druckluft- und damit Energieverlust auftritt und dass nur zwei Endlagen E1, E2 möglich sind. Zwischen den beiden Endlagen E1, E2 ist kein geregeltes Verfahren des Ventilstössels möglich, das heißt es ist kein mediumabhängiger Hub-Zeit-Zyklus einstell- und regelbar, da der Kolben des Pneumatikzylinders 110 zwischen den beiden Endlagen E1, E2 mit beliebiger Geschwindigkeit verfährt.

Darüber hinaus ist bei einem pneumatischen Antrieb für ein Ventil nachteilig, dass es an verschiedenen Stellen in der Druckluftversorgung zu Undichtigkeiten kommen kann. Da solche Undichtigkeiten in der Regel nicht sofort oder schlecht erkannt werden, führt dies bis zu einem permanenten Druckluft- und Energieverlust.

Aus der DE 41 28 983 A1, der DE 10 2007 034 768 B3, der DE 10 2007 053 005 A1 und der DE 20 2007 015 492 U1 sind jeweils spezielle Hubmagnete bekannt. Bei solchen Hubmagneten bzw. Magnetzylindern ist die Kraft-Hub-Kennlinie im allgemeinen stark degressiv oder stark progressiv, so dass die Axialkraft Ober dem Hubweg deutlich abfällt oder ansteigt. Der Hubbereich, in dem eine nennenswerte Axialkraft genutzt werden kann, ist sehr begrenzt und kurz. Aus diesem Grund sind solche Hubmagnete für Ventile mit einer Absperrkörperstange, wie zuvor beschrieben, weniger geeignet.

EP 0 955 645 A2 offenbart eine Antriebseinrichtung für ein Ventil nach dem Oberbegriff des Anspruchs 1. US 2010/0140519 A1 offenbart eine Antriebseinrichtung für ein Ventil, bei der eine Antriebsstange derart mit einem translatorisch bewegbaren Absperrkörper des Ventils koppelbar ist, dass eine translatorische Bewegung der Antriebsstange eine translatorische Bewegung des Absperrkörpers zum Öffnen und Schließen des Ventils bewirkt.

Aufgabe der Erfindung ist, eine Antriebseinrichtung für ein Ventil und ein Ventil zur Steuerung eines Gas- und/oder Flüssigkeitsstroms damit bereitzustellen, welche die Nachteile des zuvor genannten Standes der Technik beseitigen können und in Bezug auf das Ventil frei programmierbare Endlagen, ein frei wählbares und regelbares Verfahrprofil, eine möglichst hohe Kraftausbeute (großer Hubweg und hohe Absperrkörperstangenkraft bei minimalem Bauraumbedarf), kurze Schaltzeiten, einen reduzierten Energieverbrauch, einen geringen Wartungsbedarf, und eine hohe Lebensdauer aufweisen.

Die Aufgabe wird durch eine Antriebseinrichtung für ein Ventil nach Anspruch 1 gelöst, welches ein Gehäuse zur Aufnahme einer Spule und einer Antriebsstange umfasst. Die Spule steht in Bezug auf das Gehäuse fest. An der Antriebsstange sind ein Polschuh und ein in axialer Richtung der Antriebsstange magnetisiertes permanentmagnetisches oder magnetisierbares weichmagnetisches Element derart befestigt, dass die Antriebsstange gegenüber der Spule mittels Magnetkraft translatorisch bewegbar ist. Hierbei ist die Antriebsstange derart mit einem translatorisch bewegbaren Absperrkörper des Ventils koppelbar, dass eine translatorische Bewegung der Antriebsstange eine translatorische Bewegung der Absperrkörpers zum Öffnen und Schließen des Ventils bewirkt.

Vorteilhafte weitere Ausgestaltungen der Antriebseinrichtung sind in den Unteransprüchen dargelegt.

Vorzugsweise ist das Gehäuse ausgestaltet zur Aufnahme eines Metallteils, das an dem Gehäuse befestigt ist und die Spule und eine weitere daneben angeordnete Spule umgibt, wobei die Spulen an dem Metallteil befestigt sind und jeweils mindestens eine Wicklung aufweisen, deren Wicklungsrichtung einander entgegengesetzt ist. Hierbei sind an der Antriebsstange der Polschuh, ein weiterer Polschuh und das in axialer Richtung der Antriebsstange magnetisierte permanentmagnetische oder magnetisierbare weichmagnetische Element derart befestigt, dass die Antriebsstange mittels Magnetkraft in den und entlang der Spulen translatorisch bewegbar ist.

Bei der Antriebseinrichtung kann sich ein Hub der Antriebsstange aus der Länge der Spule in Längsrichtung der Antriebsstange abzüglich der Dicke des Polschuhs in Längsrichtung der Antriebsstange ergeben.

Darüber hinaus kann die Antriebseinrichtung zudem ein weiteres permanent- oder weichmagnetisches Element, das mit einem vorbestimmten Abstand beabstandet von Polschuh und permanent- oder weichmagnetischem Element an der Antriebsstange angeordnet ist, und ein weiteres weichmagnetisches Element umfassen, welches das weitere permanent- oder weichmagnetische Element umgibt.

Bevorzugt ist das Gehäuse derart ausgestaltet, dass es dicht gegen Flüssigkeit- und/oder Gaseintritt von außen ist.

Es ist möglich, dass das permanent- oder weichmagnetische Element, die zwei Polschuhe und das weitere permanent- oder weichmagnetische Element achssymmetrisch zu der Antriebsstange an der Antriebsstange angeordnet sind.

Ferner kann die Antriebseinrichtung eine Messeinrichtung zum Messen einer von der Antriebsstange in dem Gehäuse ausgeführten translatorischen Bewegung aufweisen, wobei die Messeinrichtung an einem von einer Kopplung mit dem Absperrkörper abgewandten Ende der Antriebsstange angeordnet ist.

Es ist auch vorteilhaft, wenn das Gehäuse zudem zur Aufnahme einer Regeleinrichtung zum Anschluss an eine Busleitung ausgestaltet ist, über welches die Regeleinrichtung Daten zur Steuerung und/oder Regelung der Antriebseinrichtung empfangen kann.

Die zuvor genannte Aufgabe wird zudem durch ein Ventil zur Steuerung eines Gas- und/oder Flüssigkeitsstroms gelöst, welches einen translatorisch bewegbaren Absperrkörper hat, der mit einer Antriebsstange der zuvor beschriebenen Antriebseinrichtung derart gekoppelt ist, dass eine translatorische Bewegung der Antriebsstange eine translatorische Bewegung des Absperrkörpers zum Öffnen und Schließen des Ventils bewirkt.

Durch die Ausführung der Antriebseinrichtung, wie zuvor beschrieben, sind sowohl frei programmierbare Endlagen und ein geregeltes Verfahrprofil eines mit der Antriebseinrichtung ausgestatteten Ventils ermöglicht. Hierbei kann das Verfahrprofil abhängig von der Art des Mediums (z.B. Gas oder Flüssigkeit) durch einen Bediener vorgegeben und in der Steuerung bzw. Regeleinrichtung voreingestellt werden.

Darüber hinaus werden, aufgrund der zuvor beschriebenen Ausführung der Antriebseinrichtung, die empfindlichen Komponenten der Antriebseinrichtung vor schädlichen Umgebungseinflüssen zuverlässig geschützt, nämlich beispielsweise Desinfektions- und Reinigungsmitteln, Feuchtigkeit, Staub und Stößen. Dies ist sehr vorteilhaft, da die Desinfektions- und Reinigungsmittel im Allgemeinen aggressive Säuren oder Laugen sind, so dass die Antriebseinrichtung und das Ventil sehr widrigen Umgebungsbedingungen ausgesetzt sind. Zudem können die Antriebseinrichtung und das Ventil auch bei hohen Umgebungstemperaturen zuverlässig arbeiten. Dadurch ergibt sich insgesamt eine lange Lebensdauer für die Antriebseinrichtung und das Ventil.

Ferner kann die zuvor beschriebene Antriebseinrichtung gänzlich ohne Schmierfette auskommen, und sie weist keine Reibung und keinen Verschleiß auf, so dass Umgebungsverschmutzung gänzlich ausgeschlossen ist.

Zudem ist in die Antriebseinrichtung auch zugehörige Regelelektronik mittels der Regeleinrichtung integrierbar, so dass jede einzelne Antriebseinrichtung über eine Busleitung individuell angesteuert werden kann. Dadurch werden die Dynamik des Schaltvorganges und die Genauigkeit gesteigert und zusätzlich wird der Energieverbrauch der Antriebseinrichtung. reduziert.

Als weiterer Vorteil der zuvor beschriebenen Ausführung der Antriebseinrichtung kann der Verdrahtungsaufwand minimiert werden, da der Einsatz und die Verwendung von elektronischen Bussystemen, wie beispielsweise CANopen, Ethernet, EtherCAD, Profibus, usw., möglich ist.

Außerdem werden mittels der zuvor beschriebenen Antriebseinrichtung ein großer Hubweg und eine hohe Kolbenstangenkraft bei minimalem Bauraumbedarf erzielt. Das heißt, ein mit der Antriebseinrichtung ausgestattetes Ventil hat eine hohe Kraftausbeute.

Nachfolgend ist die Erfindung anhand von Ausführungsbeispielen unter Bezugnahme auf die beigefügten Zeichnungen ausführlicher beschrieben. Es zeigen:
- Fig. 1: eine schematische Darstellung eines Ventils mit einer Antriebseinrichtung gemäß einem ersten Ausführungsbeispiel der Erfindung;
- Fig. 2: eine schematische Darstellung eines Teils der Antriebseinrichtung gemäß einem ersten Ausführungsbeispiel der Erfindung zur Berechnung des Hubs des Ventils;
- Fig. 3: eine Anlage mit einem Ventil gemäß einem ersten Ausführungsbeispiel der Erfindung; und
- Fig. 4: eine schematische Darstellung eines Ventils gemäß dem Stand der Technik.

Für gleiche oder gleich wirkende Elemente der Erfindung sind identische Bezugszeichen verwendet. Die dargestellten Ausführungsformen stellen lediglich Beispiele dar, wie die erfindungsgemäße Antriebseinrichtung, das erfindungsgemäße Ventil ausgestaltet sein kann. Sie stellen keine abschließende Begrenzung der Erfindung dar.

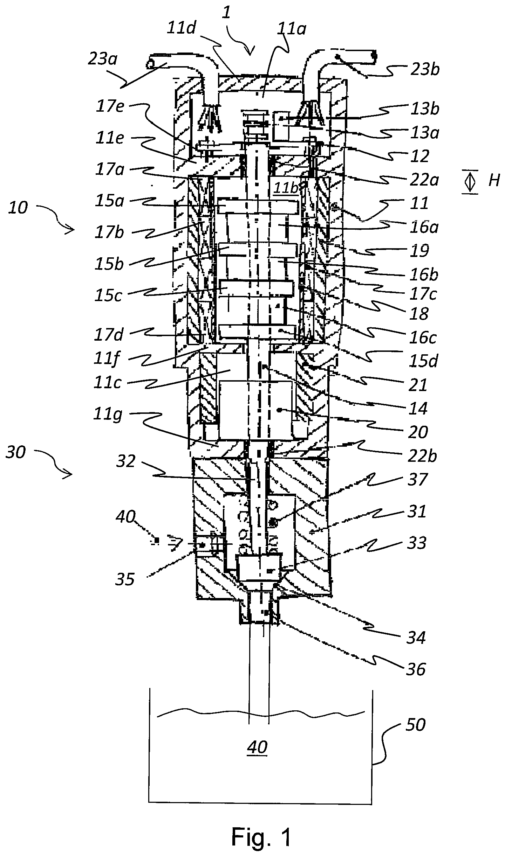

**Fig. 1** zeigt bei einem ersten Ausführungsbeispiel der Erfindung ein Ventil 1 zur Steuerung eines Gas- und/oder Flüssigkeitsstroms, das ein Ventil zur Steuerung eines Gas- und/oder Flüssigkeitsstroms in einem Rohr sein kann. Das Ventil 1 hat eine Antriebseinrichtung 10 und einen Ventilblock 30.

Die Antriebseinrichtung 10 hat ein Gehäuse 11, in welches eine Regeleinrichtung 12 zur Regelung einer von der Antriebseinrichtung 10 erzeugten Antriebskraft, eine Messeinrichtung 13a, 13b, eine Antriebsstange 14, ein erster bis vierter Polschuh 15a, 15b, 15c, 15d, ein erstes bis drittes permanentmagnetisches Element 16a, 16b, 16c, eine erste bis vierte Spule 17a, 17b, 17c, 17d mit elektrischen Anschlussleitungen 17e, ein Spulenträger 18, ein Metallteil 19, ein weiteres permanentmagnetisches Element 20, ein weichmagnetisches Element 21, und ein erstes und zweites Lager 22a, 22b zur Lagerung der Antriebsstange 14 in und an dem Gehäuse 11 aufgenommen sind. In das Gehäuse 11 sind eine erste und zweite elektrische Leitung 23a, 23b eingeführt, über welche die Antriebseinrichtung 10 mit elektrischer Energie versorgt werden kann und an eine hier nicht dargestellte Steuereinrichtung einer übergeordneten Anlage anschließbar ist.

Das Gehäuse 11 ist in **Fig. 1** in einen ersten Gehäuseraum 11a, einen zweiten Gehäuseraum 11b und einen dritten Gehäuseraum 11c unterteilt. Der erste Gehäuseraum 11a grenzt an den zweiten Gehäuseraum 11b an. Der zweite Gehäuseraum 11b grenzt an den dritten Gehäuseraum 11c an. Der zweite Gehäuseraum 11b liegt also zwischen dem ersten und dritten Gehäuseraum 11a, 11c. Der erste Gehäuseraum hat eine in Fig. 1 ganz oben angeordnete Außenwand 11d, die auch den ersten Gehäuseraum 11a an einer Seite begrenzt. Zwischen dem ersten und zweiten Gehäuseraum 11a, 11b ist eine Gehäusezwischenwand 11e vorhanden. Zwischen dem zweiten und dritten Gehäuseraum 11b, 11c ist eine Gehäusezwischenwand 11f vorhanden. Zudem grenzt das Gehäuse 11 mit einer Außenwand 11g an den Ventilblock 30 an. Die Außenwand 11g begrenzt auch den dritten Gehäuseraum 11c an einer Seite.

In den ersten Gehäuseraum 11a sind die Regeleinrichtung 12 und die Messeinrichtung 13a, 13b aufgenommen. Auf einer Seite des ersten Gehäuseraums 11a, welche der Außenwand 11d des Gehäuses 11 entspricht, ragen die erste und zweite elektrische Leitung 23a, 23b mit einem ihrer Enden, also teilweise, in den ersten Gehäuseraum 11a hinein. Auf der der Außenwand 11d des Gehäuses 11 gegenüberliegenden Seite des ersten Gehäuseraums 11a bzw. auf der Seite der Gehäusezwischenwand 11e ragt die Antriebsstange 14 mit einem ihrer zwei Enden, also teilweise, in den ersten Gehäuseraums 11a hinein. Zudem führen durch die Gehäusezwischenwand 11e die elektrischen Anschlussleitungen 17e, um die Spulen 17a, 17b, 17c, 17d an die Regeleinrichtung 12 anzuschliessen.

In den zweiten Gehäuseraum 11b sind der erste bis vierte Polschuh 15a, 15b, 15c, 15d, das erste bis dritte permanentmagnetische Element 16a, 16b, 16c, die erste bis vierte Spule 17a, 17b, 17c, 17d an dem Spulenträger 18, und das Metallteil 19 aufgenommen. Demgegenüber führt die Antriebsstange 14 vollständig durch den zweiten Gehäuseraum 11b hindurch. Hierbei ist die Antriebsstange 14 in der Gehäusezwischenwand 11e mittels des ersten Lagers 22a translatorisch bewegbar gelagert, wohingegen sie durch eine Öffnung in der Gehäusezwischenwand 11e ohne Lagerung in den dritten Gehäuseraum 11c ragt.

In den dritten Gehäuseraum 11c sind das weitere permanentmagnetische Element 20 und das weichmagnetische Element 21 aufgenommen. Demgegenüber führt die Antriebsstange 14 auch vollständig durch den dritten Gehäuseraum 11c. Hierbei ist die Antriebsstange 14 in der an den Ventilblock 30 angrenzenden Außenwand 11g des Gehäuses 11 mittels des zweiten Lagers 22b translatorisch bewegbar gelagert.

Durch die translatorische Lagerung der Antriebsstange 14 mittels des ersten und zweiten Lagers 22a, 22b kann die Antriebsstange 14 um einen Hub H angehoben und abgesenkt werden bzw. hin und her bewegt werden, wie in Fig. 1 mittels eines Pfeils mit zwei Pfeilenden dargestellt. Hierfür sind an der Antriebsstange 14 im zweiten Gehäuseraum 11b der erste bis vierte Polschuh 15a, 15b, 15c, 15d und das erste bis dritte permanentmagnetische Element 16a, 16b, 16c jeweils abwechselnd derart nebeneinander angeordnet, dass vorzugsweise kein Abstand zwischen ihnen vorhanden ist. Das heißt, der erste Polschuh 15a, das erste permanentmagnetische Element 16a, der zweite Polschuh 15b, das zweite permanentmagnetische Element 16b, der dritte Polschuh 15c, das dritte permanentmagnetische Element 16c, und der vierte Polschuh 15d sind in dieser Reihenfolge nebeneinander angeordnet. Hierbei ist in Fig. 1 der erste Polschuh 15a als oberste Komponente dieser Reihenfolge angeordnet, und der vierte Polschuh 15d ist als unterste Komponente dieser Reihenfolge angeordnet. Zudem ist die erste Spule 17a als Ring um den ersten Polschuh 15a herum angeordnet. Die zweite Spule 17b ist als Ring um den zweiten Polschuh 15b herum angeordnet. Die dritte Spule 17c ist als Ring um den dritten Polschuh 15c herum angeordnet. Und die vierte Spule 17d ist als Ring um den vierten Polschuh 15d herum angeordnet. Die erste bis vierte Spule 17a, 17b, 17c, 17d sind, vorzugsweise ohne Abstand, nebeneinander an dem Spulenträger 18 angeordnet, der wiederum zwischen den Spulen 17a, 17b, 17c, 17d und der Baugruppe angeordnet ist, die aus Polschuhen 15a, 15b, 15c, 15d und permanentmagnetischen Elementen 16a, 16b, 16c an der Antriebsstange 14 gebildet ist.

Der Spulenträger 18 ist in **Fig. 1** als Rohr ausgeführt und dient zum Tragen, Abstützen und Schutz der Spulen 17a, 17b, 17c, 17d. Die Spulen 17a, 17b, 17c, 17d sind direkt auf den Spulenträger 18 aufgewickelt. Die Spulen 17a, 17b, 17c, 17d sind elektrisch in Reihe geschaltet und haben jeweils mindestens eine Wicklung, wobei die mindestens eine Wicklung in Bezug auf die angrenzenden Spulen abwechselnd gegen den Uhrzeigersinn (cc-) und im Uhrzeigersinn (cw-) gewickelt ist. An beiden Enden der von den Spulen 17a, 17b, 17c, 17d gebildeten Spulenbaugruppe ist jeweils nur eine einzige Anschlussleitung 17e, beispielsweise ein Draht, vorgesehen, über welche bzw. welchen die an dem Spulenträger 18 gebildete Spulenbaugruppe mit der Regeleinrichtung 12 elektrisch gekoppelt ist, wie in **Fig. 1** veranschaulicht.

Auf der von dem Spulenträger 18 abgewandten Seite der Spulen 17a, 17b, 17c, 17d ist das Metallteil 19 um die Spulen 17a, 17b, 17c, 17d herum angeordnet. Das heißt, auch das Metallteil 19 ist in **Fig. 1** als Rohr ausgeführt. Das Metallteil 19 ist an dem Gehäuse 11 befestigt. Darüber hinaus sind die Spulen 17a, 17b, 17c, 17d bzw. der Spulenträger 18 an dem Metallteil 19 und/oder dem Gehäuse 11 befestigt. Demzufolge sind die erste bis vierte Spule 17a, 17b, 17c, 17d, der Spulenträger 18 und das Metallteil 19 auch um die permanentmagnetischen Elemente 16a, 16b, 16c und die Antriebsstange 14 herum angeordnet.

Zwischen dem Spulenträger 18 und der Baugruppe aus Polschuhen 15a, 15b, 15c, 15d und permanentmagnetischen Elementen 16a, 16b, 16c an der Antriebsstange 14 ist ein derartiger Abstand vorhanden, dass sich die Antriebsstange 14 mit der Baugruppe aus Polschuhen 15a, 15b, 15c, 15d und permanentmagnetischen Elementen 16a, 16b, 16c gegenüber dem feststehenden Spulenträger 18 translatorisch um den Hub H bewegen kann. Haben die Polschuhe 15a, 15b, 15c, 15d einen größeren äußeren Umfang als die permanent- oder weichmagnetischen Elemente 16a, 16b, 16c, wie in **Fig. 1** gezeigt, ist der Abstand zwischen den Polschuhen 15a, 15b, 15c, 15d und dem Spulenträger 18 so zu bemessen, dass sich die Antriebsstange 14 mit der Baugruppe aus Polschuhen 15a, 15b, 15c, 15d und permanentmagnetischen Elementen 16a, 16b, 16c gegenüber dem feststehenden Spulenträger 18 translatorisch um den Hub H bewegen kann.

Das Metallteil 19, die Reihe aus nebeneinander angeordneten Spulen 17a, 17b, 17c, 17d und der Spulenträger 18 sind von ihrer Länge bzw. Höhe her in die Länge des zweiten Gehäuseraums 11b eingepasst, dass heißt, das Metallteil 19 und der Spulenträger 18 sind **in** **Fig. 1** in etwa genauso hoch oder etwas kürzer als die Länge des zweiten Gehäuseraums 11b und die Reihe aus nebeneinander angeordneten Spulen 17a, 17b, 17c, 17d ist in etwa genauso lang oder etwas kürzer als die Länge des zweiten Gehäuseraums 11b. Das Metallteil 19 ist vorzugsweise aus einem magnetisierbaren Metall, wie beispielsweise Eisen, gefertigt und dient als Metall- bzw. Eisenrückschluss.

Das erste bis dritte permanentmagnetische Element 16a, 16b, 16c sind jeweils axial, also in Achsrichtung der Antriebsstange 14, die vertikale Richtung in **Fig. 1****,** magnetisiert. Darüber hinaus sind die Antriebsstange 14, der erste bis vierte Polschuh 15a, 15b, 15c, 15d und das erste bis dritte permanentmagnetische Element 16a, 16b, 16c rotationssymmetrisch ausgestaltet. Dadurch ist eine Verdrehsicherung dieser Komponenten nicht erforderlich.

Die Messeinrichtung 13a, 13b umfasst eine Maßverkörperung 13a, die aus zwei Nuten in der Antriebsstange 14 besteht, und eine Erfassungseinrichtung 13b zur Erfassung der Position bzw. Stellung der Maßverkörperung 13b. Hierzu ist die Erfassungseinrichtung 13b in **Fig. 1** der Maßverkörperung 13b zugewandt angeordnet. Die von der Erfassungseinrichtung 13b erfasste Position der Antriebsstange 14 kann mittels der in das Gehäuse 11 eingeführten ersten und/oder zweiten elektrischen Leitung 23a, 23b an die Regeleinrichtung 12 und/oder eine hier nicht dargestellte übergeordnete Steuer- und/oder Regeleinrichtung weitergeben werden. Auf der Grundlage der erfassten Position kann die Regeleinrichtung 12 und/oder die übergeordnete Steuer- und/oder Regeleinrichtung die Antriebseinrichtung 10 wie gewünscht regeln bzw. steuern. Über die erste und/oder zweite elektrische Leitung 23a, 23b kann die Antriebseinrichtung 10 auch mit elektrischer Energie versorgt werden.

Wird an die Spulen 17a, 17b, 17c, 17d eine elektrische Spannung angelegt, so dass die Spulen 17a, 17b, 17c, 17d von einem elektrischen Strom durchflossen werden, bildet sich ein Magnetfeld um die Wicklungen jeder Spule 17a, 17b, 17c, 17d, aufgrund dessen die Anordnung aus Polschuhen 15a, 15b, 15c, 15d und permanentmagnetischen Elementen 16a, 16b, 16c in **Fig. 1** nach oben gezogen wird. Je nach Stärke und Verlauf des in den Spulen 17a, 17b, 17c, 17d fließenden Stroms wird die Anordnung aus Polschuhen 15a, 15b, 15c, 15d und permanentmagnetischen Elementen 16a, 16b, 16c schnell oder langsam bzw. ganz oder nur teilweise nach oben gezogen. Bei der in **Fig. 1** gezeigten Stellung der Antriebsstange 14 werden die Spulen 17a, 17b, 17c, 17d mit keinem elektrischen Strom durchflossen, so dass sich der unterste Polschuh 15d in seiner untersten Stellung befindet.

In dem dritten Gehäuseraum 11c ist das weitere permanentmagnetische Element 20 ebenfalls auf der Antriebsstange 14 angebracht, beispielsweise aufgesteckt. Das weitere permanentmagnetische Element 20 ist axial magnetisiert. Das weichmagnetische Element 21 ist in **Fig. 1** ringförmig, beispielsweise als Rohr, ausgestaltet, welches das weitere permanentmagnetische Element 20 umgibt. Durch die magnetische Anziehungskraft zwischen dem weiteren permanentmagnetischen Element 20 und dem weichmagnetischen Element 21 wird das weitere permanentmagnetische Element 20 in das weichmagnetische Element 21 gezogen. Dadurch entsteht eine Kraftwirkung, die der Gewichtskraft der Komponenten bzw. Baugruppe an der Antriebsstange 14 und der nachfolgend beschriebenen Federvorspannung des Ventils 1 entgegen gerichtet ist und diese wenigstens zum Teil kompensiert.

Der Ventilblock 30 in **Fig. 1** hat ein Ventilblockgehäuse 31, eine Absperrkörperstange 32, einen Absperrkörper 33, einen Ventilsitz 34, eine Mediumseinlassöffnung 35, eine Mediumsauslassöffnung 36 und eine Druckfeder 37.

Die Absperrkörperstange 32 ist mit der Antriebsstange 14 der Antriebseinrichtung 10 derart gekoppelt, dass eine translatorische Bewegung der Antriebsstange 14 auch eine translatorische Bewegung der Absperrkörperstange 32 bewirkt. Bei dem Ventilblock 30 sind die Antriebsstange 14 und die Absperrkörperstange 32 des Ventils 1 mittels eines Durchgangslochs in einer Wand des Ventilblockgehäuses gekoppelt, in welchem die Antriebsstange 14 an der Absperrkörperstange 32 anliegt und sie aneinander befestigt sind. Darüber hinaus ist in dem Ventilblock 30 die Druckfeder 37 derart eingebaut, dass im drucklosen Zustand, wenn also kein Strom in den Spulen 17a, 17b, 17c, 17d fließt, der Absperrkörper 33 am Ventilsitz 34 anliegt und somit die Mediumsauslassöffnung 36 und damit das Ventil 1 schließt. Fließt dagegen in den Spulen 17a, 17b, 17c, 17d ein Strom, so wird der Absperrkörper 33 von dem Ventilsitz 34 angehoben und somit das Ventil 1 zumindest teilweise oder auch ganz geöffnet. Die Öffnung des Ventils 1 ist also abhängig von der Stärke des in den Spulen 17a, 17b, 17c, 17d fließenden Stroms. Dadurch kann ein an der Mediumseinlassöffnung 35 einströmendes Medium 40 (z.B. Gas und/oder Flüssigkeit) über die Mediumsauslassöffnung 36 in den darunter angeordneten Behälter 50 strömen. Sobald der Behälter 50 ausreichend mit dem Medium 40 befüllt ist, kann das Ventil 1 wieder geschlossen werden.

Die in **Fig. 1** gezeigte Antriebseinrichtung 10 benötigt für die zuvor beschriebene Funktion minimal eine der Spulen 17a, 17b, 17c, 17d mit mindestens einer Wicklung, die in Bezug auf das Gehäuse 11 feststeht, und die Antriebsstange 14, an der einer der Polschuhe 15a, 15b, 15c, 15d und ein in axialer Richtung der Antriebsstange 14 magnetisiertes permanentmagnetisches Element derart befestigt sind, dass die Antriebsstange 14 gegenüber der einen Spule der Spulen 17a, 17b, 17c, 17d mittels Magnetkraft translatorisch bewegbar ist.

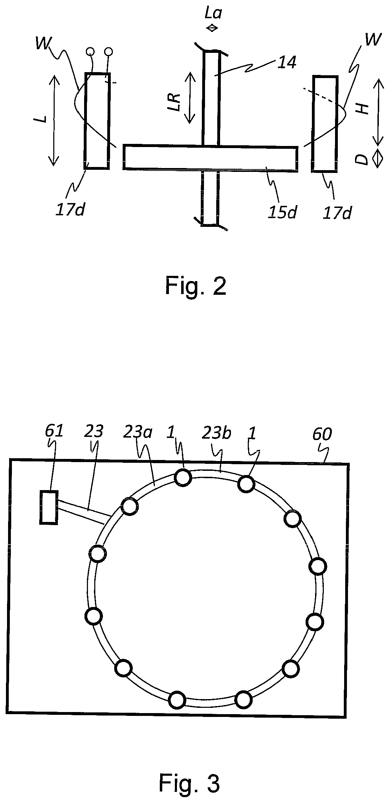

**Fig. 2** zeigt Teile der Antriebseinrichtung 10 von **Fig. 1****,** die zur Erläuterung der Berechnung des erzielbaren Hubs H der Antriebsstange 14 erforderlich sind. Das heißt, in **Fig. 2** ist die Spule 17d im Schnitt und der Polschuh 15d an der Antriebsstange 14 im Vergleich zu der Darstellung in Fig. 1 vergrößert dargestellt. Die nachfolgenden Ausführungen gelten entsprechend auch für die anderen Spulen 17a bis 17c und die Polschuhe 15a bis 15c, auch wenn diese hier nicht genannt sind.

In **Fig. 2** hat die Spule 17d eine Länge L und eine Wicklung W, die in dem bereich von Antriebsstange 14 und Polschuh 15d zur Vereinfachung der Darstellung nicht dargestellt ist. Die Längsrichtung der Antriebsstange 14 ist mit LR bezeichnet und der Polschuh 15d hat eine Dicke D. Somit ergibt sich der erzielbare Hub H der Antriebsstange 14 als die Länge L der Spule 17d, die in **Fig. 1** und **Fig. 2** in vertikaler Richtung (entspricht Längsrichtung LR der Antriebsstange 14) dargestellt ist, abzüglich der Dicke D des Polschuhs 15d, die in **Fig. 1** und **Fig. 2** ebenfalls in vertikaler Richtung dargestellt ist. Der nutzbare Hub erstreckt sich auf einen Polschritt, der durch die Spulenlänge abzüglich Polschuhbreite bestimmt wird, die in **Fig. 1** und **Fig. 2** in horizontaler Richtung dargestellt ist.

Bei der zuvor beschriebenen Antriebseinrichtung 10 handelt es sich um einen permanentmagneterregten Magnetzylinder, der anstelle des beschriebenen Pneumatikzylinders des Standes der Technik zum Antrieb des Ventilblocks 30 zum Einsatz kommt. Der Magnetzylinder ist mit Hilfe gängiger Servoverstärker auf einfache Weise steuer- und regelbar. Durch den Einsatz der permanentmagnetischen Elemente 16a, 16b, 16c ist der Wirkungsgrad der Antriebseinrichtung 10 hoch und damit ihr erforderliches Bauvolumen klein. Ferner ist auch der Hub H, in dem die Axialkraft der permanentmagnetischen Elemente 16a, 16b, 16c genutzt werden kann, lang und der Axialkraftverlauf über dem Hub H ist weitgehend konstant.

Die Regeleinrichtung 12 und die Messeinrichtung 13a, 13b sind zwar durch die zuvor beschriebene Anordnung in zwei verschiedenen Gehäuseräumen 11a, 11b von den Spulen 17a, 17b, 17c, 17d an dem Spulenträger 18 und dem Metallteil 19 getrennt, jedoch bilden diese, da alle kompakt in einem einzigen Gehäuse 11 untergebracht sind, eine Antriebseinheit. Durch eine geeignete Abdichtung der Durchführungen der elektrischen Leitungen 23a, 23b und der Antriebsstange 14 durch die Außenwände 11d und 11g des Gehäuses 11 kann die Antriebseinheit bzw. die ganze Antriebseinrichtung 10 gegen ein Eindringen von Gas- und/oder Flüssigkeit von außen geschützt werden. Damit kann die Antriebseinheit bzw. die ganze Antriebseinrichtung 10 vor schädlichen Umgebungseinflüssen geschützt werden.

**Fig. 3** zeigt schematisch eine Draufsicht auf eine Anlage 60 mit einer Steuer- und/oder Regeleinrichtung 61 und einer Vielzahl von Ventilen 1, wobei in **Fig. 3** nur ein Teil der Ventile 1 mit einem Bezugszeichen versehen ist. Die Ventile 1 sind bei der Anlage 60 im Kreis und mit einem vorbestimmten Abstand, der bevorzugt zwischen alle Ventilen 1 gleich ist, zueinander angeordnet. Die Ventile 1 sind jeweils mittels der elektrischen Leitungen 23a, 23b aneinander angeschlossen, auch wenn **in** **Fig. 3** nur zwei der Leitungen 23a, 23b bezeichnet sind. Die Leitungen 23a, 23b können eine Busleitung bzw. ein Bussystem, wie beispielsweise CANopen, Ethernet, EtherCAD, Profibus, usw., zur Übertragung von Daten zwischen den einzelnen Ventilen 1 und der Steuer- und/oder Regeleinrichtung 61 bilden bzw. umfassen. Die Leitungen 23a, 23b können auch als Leistungsversorgungsleitungen dienen bzw. solche umfassen. Das heißt, Leitungen 23a, 23b bzw. die Busleitungen und die Leistungsversorgungsleitungen sind von einem Ventil 1 bzw. ihrer Antriebseinrichtung 10 zu einem anderen Ventil 1 bzw. ihrer Antriebseinrichtung 10 weiter durch geschleift. Dadurch ist der Verdrahtungsaufwand gegenüber einer Einzelverdrahtung zwischen jedem einzelnen Ventil 1 und der Steuer- und/oder Regeleinrichtung 61 deutlich minimiert.

Bei dem zuvor beschriebenen ersten Ausführungsbeispiel sind typische Schaltzyklen für das Ventil 1 abhängig von der geforderten Ausbringungsleistung. Die Schaltzyklen betragen beispielsweise bis zu ca. 100 Hübe pro Minute. Hierbei soll bevorzugt ein freiprogrammierbarer Hubweg von 0 mm bis 25 mm realisiert werden. Ansteuerspannungen können Niederspannungen von 24 oder 48 Volt oder dergleichen sein. Dabei entsteht eine thermische Verlustleistung von ca. 50 Watt.

Typische Umgebungstemperaturen können bis zu +90 °C betragen. Als Schutzklasse zum Schutz gegen Berührung der spannungsführenden Teile und gegen Eindringen von Feuchtigkeit ist bevorzugt die Schutzklasse druckstrahlwasserdicht zu wählen.

Gemäß einem zweiten Ausführungsbeispiel der Erfindung findet bei der Antriebseinrichtung 10 des Ventils 1 von **Fig. 1** bis **Fig. 3** anstelle der permanentmagnetischen Elemente 16a, 16b, 16c ein weichmagnetisches Element, wie beispielsweise ein Weicheisenkern, Verwendung. Hierbei ist jedoch die Effektivität der Antriebseinrichtung 10 gemäß dem zweiten Ausführungsbeispiel nicht so hoch wie bei dem ersten Ausführungsbeispiel, d.h. Magnetzylinder mit weichmagnetischen Elementen zwischen den Polschuhen 15a, 15b, 15c, 15d beanspruchen bei gleicher mechanischer Abgabeleistung einen wesentlich größeren Bauraum.

Gemäß einem dritten Ausführungsbeispiel der Erfindung findet bei der Antriebseinrichtung 10 des Ventils 1 von **Fig. 1** bis **Fig. 3** anstelle der Komponenten im zweiten Gehäuseraum 11b eine Spindelbaugruppe Verwendung, die beispielsweise mit einem Schrittmotor angetrieben sein könnte. Hierbei ist jedoch eine Schmierung für die Spindel erforderlich. Dies kann zu einer Verschmutzung des zu steuernden Mediums 40 führen, wie in **Fig. 1** veranschaulicht.

Alle zuvor im Zusammenhang mit dem ersten bis dritten Ausführungsbeispiel beschriebenen Ausgestaltungen der Antriebseinrichtung 10, des Ventils 1, und der Anlage 60 können einzeln oder in Kombination Verwendung finden. Insbesondere sind bei allen Ausführungsbeispielen folgende Abwandlungen denkbar.

Die Abmessungen der in den **Fig. 1** bis **Fig. 3** gezeigten Teile sind insoweit beliebig, als die zuvor beschriebene Funktion dieser Teile erzielt werden kann. Beispielsweise müssen das Metallteil 19, der Spulenträger 18 und die Spulen 17a, 17b, 17c, 17d in der Länge nicht genau in die Länge des zweiten Gehäuseraums 11b eingepasst sein, sondern können auch kürzer als der zweite Gehäuseraum 11b bemessen sein.

Das Gehäuse 11 kann aus korrosionsbeständigem Edelstahl, vorzugsweise austenitischem Edelstahl, oder Kunststoff, vorzugsweise korrosionsbeständigem Kunststoff, gefertigt sein. Die Antriebsstange 14 kann aus einem para- oder diamagnetischen Material, wie austenitischer Edelstahl oder ein Nichteisenmetall, gefertigt sein. Die Polschuhe 22 können eine zylindrische Form haben und aus einem weichmagnetischen Stahl gefertigt sein. Die permanentmagnetischen Elemente 16a, 16b, 16c und das weitere permanentmagnetische Element 20 können aus Hartferrit, SmCo (Seltenerden) oder NdFeB hergestellt sein. Das Metallteil 19 kann als Rohr aus einem weichmagnetischen Werkstoff, wie beispielsweise Eisen, massiv oder geblecht gefertigt sein. Der Spulenträger 18 ist im einfachsten Fall ein Rohr aus Kunststoff.

Die Spulen 17a, 17b, 17c, 17d können auch mit mehr als einem Anschlußdraht an die Regeleinrichtung 12 elektrisch angeschlossen sein.

Die Lager 22a, 22b können beispielsweise Linearwälz- oder Gleitlager sein.

Die Baugruppe bestehend aus der Antriebsstange 14, den Polschuhen 15a, 15b, 15c, 15d und den permanentmagnetischen Elemente 16a, 16b, 16c muss nicht rotationssymmetrisch gestaltet sein. In einem solchen Fall ist zusätzlich eine Verdrehsicherung sinnvoll, um die Antriebsstange 14, die Polschuhe 15a, 15b, 15c, 15d und die permanentmagnetischen Elemente 16a, 16b, 16c gegen Verdrehen zu sichern.

In die Spulenanordnung an dem Spulenträger 18 können auch Temperatursensoren oder -schalter eingebettet sein, mit deren Hilfe die Baugruppe in dem zweiten Gehäuseraum 11b überwacht und gegen Überhitzung geschützt wird.

Die mindestens eine Wicklung der Spulen 17a, 17b, 17c, 17d ist einphasig aufgebaut, was mit einer sehr einfachen Regeleinrichtung 12 betrieben werden kann. Je nach erforderlicher Axialkraft können weniger als vier oder auch zusätzliche Spulen am Spulenträger 18 hinzugefügt und in Reihe geschaltet werden, sowie weniger als drei zusätzliche permanentmagnetische Elemente 16a, 16b, 16c oder magnetisierbare weichmagnetische Elemente und vier Polschuhe an der Antriebsstange 14 hinzugefügt werden. Die Anzahl der Spulen am Spulenträger 18 und der permanentmagnetische bzw. weichmagnetischen Elemente und der Polschuhe an der Antriebsstange 14 richtet sich lediglich nach dem für den Absperrkörper 33 des Ventilblocks 30 zum Öffnen des Ventils 1 erforderlichen Hubs.

Der Absperrkörper 33 kann ein Kolben, eine Kugel, eine Nadel usw. sein. Somit ist das aus Antriebseinrichtung 10 und Ventilblock 30 gebildete System modular aufgebaut und kann auf den geforderten Axialkraftbereich angepasst und abgestimmt werden.

Bei der Maßverkörperung 13a können die Nuten zylindrische, umlaufende Nuten mit einer Nutbreite von bevorzugt ca. 0,5 bis 2,0 mm sein. Die Erfassungseinrichtung 13b kann die Nuten induktiv oder magnetoresistiv, also bevorzugt berührungslos, mittels eines geeigneten Abtastkopfes abtasten.

## Patentansprüche

1. Antriebseinrichtung (10) für ein Ventil (1), mit einem Gehäuse (11) zur Aufnahme
einer Spule (17d), die in Bezug auf das Gehäuse (11) feststeht, und
einer Antriebsstange (14), an der ein Polschuh (15d) und ein in axialer Richtung der Antriebsstange (14) magnetisiertes permanentmagnetisches oder magnetisierbares weichmagnetisches Element (16c) derart befestigt sind, dass die Antriebsstange (14) gegenüber der Spule (17d) mittels Magnetkraft translatorisch bewegbar ist, wobei die Antriebsstange (14) derart mit einem translatorisch bewegbaren Absperrkörper (33) des Ventils (1) koppelbar ist, dass eine translatorische Bewegung der Antriebsstange (14) eine translatorische Bewegung des Absperrkörpers (33) zum Öffnen und Schließen des Ventils (1) bewirkt, wobei das Gehäuse (11) ausgestaltet ist zur Aufnahme
eines Metallteils (19), das an dem Gehäuse (11) befestigt ist und die Spule (17d) und eine weitere daneben angeordnete Spule (17c) umgibt, wobei die Spulen (17c, 17d) an dem Metallteil (19) befestigt sind und
wobei an der Antriebsstange (14) der Polschuh (15d), ein weiterer Polschuh (15c) und das in axialer Richtung der Antriebsstange (14) magnetisierte permanentmagnetische oder magnetisierbare weichmagnetische Element (16c) derart befestigt sind, dass die Antriebsstange (14) mittels Magnetkraft in den und entlang der Spulen (17c, 17d) translatorisch bewegbar ist, **dadurch gekennzeichnet, dass** die Spulen jeweils mindestens eine Wicklung aufweisen, deren Wicklungsrichtung einander entgegengesetzt ist.

2. Antriebseinrichtung nach Anspruch 1, wobei sich ein Hub (H) der Antriebsstange (14) aus der Länge (L) der Spule (17d; 17c) in Längsrichtung (LR) der Antriebsstange (14) abzüglich der Dicke (D) des Polschuhs (15d; 15c) in Längsrichtung (LR) der Antriebsstange (14) ergibt.

3. Antriebseinrichtung nach einem der vorangehenden Ansprüche, zudem mit
einem weiteren permanent- oder weichmagnetischen Element (20), das mit einem vorbestimmten Abstand beabstandet von Polschuh (15d) und permanent- oder weichmagnetischem Element (16c) an der Antriebsstange (14) angeordnet ist, und
einem weiteren weichmagnetischen Element (21), welches das weitere permanent- oder weichmagnetische Element (20) umgibt.

4. Antriebseinrichtung nach einem der vorangehenden Ansprüche, wobei das Gehäuse (11) derart ausgestaltet ist, dass es dicht gegen Flüssigkeit- und/oder Gaseintritt von außen ist.

5. Antriebseinrichtung nach Anspruch 3, wobei das permanent- oder weichmagnetische Element (16c), die zwei Polschuhe (15d, 15c) und das weitere permanent- oder weichmagnetische Element (20) achssymmetrisch zu der Antriebsstange (14) an der Antriebsstange (14) angeordnet sind.

6. Antriebseinrichtung nach einem der vorangehenden Ansprüche, zudem mit einer Messeinrichtung (13a, 13b) zum Messen einer von der Antriebsstange (14) in dem Gehäuse (11) ausgeführten translatorischen Bewegung, wobei die Messeinrichtung (13a, 13b) an einem von einer Kopplung mit dem Absperrkörper (33) abgewandten Ende der Antriebsstange (14) angeordnet ist.

7. Antriebseinrichtung nach einem der vorangehenden Ansprüche, wobei das Gehäuse (11) zudem zur Aufnahme einer Regeleinrichtung (12) zum Anschluss an eine Busleitung (23a, 23b) ausgestaltet ist, über welches die Regeleinrichtung (12) Daten zur Steuerung und/oder Regelung der Antriebseinrichtung (10) empfangen kann.

8. Ventil (1) zur Steuerung eines Gas- und/oder Flüssigkeitsstroms (40), mit einem translatorisch bewegbaren Absperrkörper (33), der mit einer Antriebsstange (14) einer Antriebseinrichtung (10) nach einem der vorangehenden Ansprüche, die Teil des Ventils ist, derart gekoppelt ist, dass eine translatorische Bewegung der Antriebsstange (14) eine translatorische Bewegung des Absperrkörpers (33) zum Öffnen und Schließen des Ventils (1) bewirkt.

## Claims

1. Drive device (10) for a valve (1), having a housing (11) for receiving
a coil (17d) which is fixed in relation to the housing (11), and
a drive rod (14), to which a pole shoe (15d) and a permanently magnetic or magnetizable magnetically soft element (16c) which is magnetized in the axial direction of the drive rod (14) are fastened in such a way that the drive rod (14) can be moved translationally with respect to the coil (17d) by means of magnetic force,
it being possible for the drive rod (14) to be coupled to a translationally movable shut-off body (33) of the valve (1) in such a way that a translational movement of the drive rod (14) brings about a translational movement of the shut-off body (33) for opening and closing the valve (1), the housing (11) being configured for receiving
a metal part (19) which is fastened to the housing (11) and surrounds the coil (17d) and a further coil (17c) which is arranged next to it, the coils (17c, 17d) being fastened to the metal part (19), and
a further pole shoe (15c) and the permanently magnetic or magnetizable magnetically soft element (16c) which is magnetized in the axial direction of the drive rod (14) being fastened to the drive rod (14) of the pole shoe (15d) in such a way that the drive rod (14) can be moved translationally in the and along the coils (17c, 17d) by means of magnetic force, **characterized in that** the coils have in each case at least one winding, the winding direction of which is opposed to one another.

2. Drive device according to Claim 1, a stroke (H) of the drive rod (14) resulting from the length (L) of the coil (17d; 17c) in the longitudinal direction (LR) of the drive rod (14) minus the thickness (D) of the pole shoe (15d; 15c) in the longitudinal direction (LR) of the drive rod (14).

3. Drive device according to either of the preceding claims, additionally having
a further permanently magnetic or magnetically soft element (20) which is arranged on the drive rod (14) spaced apart at a predefined spacing from the pole shoe (15d) and the permanently magnetic or magnetically soft element (16c), and
a further magnetically soft element (21) which surrounds the further permanently magnetic or magnetically soft element (20).

4. Drive device according to one of the preceding claims, the housing (11) being configured in such a way that it is sealed against the entry of liquid and/or gas from the outside.

5. Drive device according to Claim 3, the permanently magnetic or magnetically soft element (16c), the two pole shoes (15d, 15c) and the further permanently magnetic or magnetically soft element (20) being arranged on the drive rod (14) axially symmetrically with respect to the drive rod (14).

6. Drive device according to one of the preceding claims, additionally having a measuring device (13a, 13b) for measuring a translational movement which is carried out by the drive rod (14) in the housing (11), the measuring device (13a, 13b) being arranged at an end of the drive rod (14), which end faces away from a coupling to the shut-off body (33).

7. Drive device according to one of the preceding claims, the housing (11) additionally being configured for receiving a regulating device (12) for connection to a bus line (23a, 23b), via which the regulating device (12) can receive data for controlling and/or regulating the drive device (10).

8. Valve (1) for controlling a gas and/or liquid flow (40), having a translationally movable shut-off body (33) which is coupled to a drive rod (14) of a drive device (10) according to one of the preceding claims which is part of the valve, in such a way that a translational movement of the drive rod (14) brings about a translational movement of the shut-off body (33) for opening and closing the valve (1).

## Revendications

1. Dispositif d'entraînement (10) pour une soupape (1), comprenant un boîtier (11) pour recevoir une bobine (17d) qui est fixée par rapport au boîtier (11), et
une tige d'entraînement (14) au niveau de laquelle sont fixés une pièce polaire (15d) et un élément magnétique doux (16c) à aimantation permanente ou magnétisable magnétisé dans la direction axiale de la tige d'entraînement (14) de telle sorte que la tige d'entraînement (14) puisse être déplacée en translation par rapport à la bobine (17d) au moyen de la force magnétique,
la tige d'entraînement (14) pouvant être accouplée à un corps d'arrêt (33) de la soupape (1) déplaçable en translation de telle sorte qu'un mouvement de translation de la tige d'entraînement (14) provoque un mouvement de translation du corps d'arrêt (33) pour ouvrir et fermer la soupape (1), le boîtier (11) étant configuré pour recevoir une pièce métallique (19) qui est fixée au boîtier (11) et qui entoure la bobine (17d) et une autre bobine disposée à côté (17c), les bobines (17c, 17d) étant fixées à la pièce métallique (19) et
la pièce polaire (15d), une pièce polaire supplémentaire (15c), et l'élément magnétique doux (16c) à aimantation permanente ou magnétisable magnétisé dans la direction axiale de la tige d'entraînement (14) étant fixés à la tige d'entraînement (14) de telle sorte que la tige d'entraînement (14) puisse être déplacée par la force magnétique en translation dans et le long des bobines (17c, 17d), **caractérisé en ce que** les bobines présentent à chaque fois au moins un enroulement dont le sens d'enroulement est mutuellement opposé.

2. Dispositif d'entraînement selon la revendication 1, dans lequel une course (H) de la tige entraînement (14) s'obtient à partir de la longueur (L) de la bobine (17d ; 17c) dans la direction longitudinale (LR) de la tige d'entraînement (14) moins l'épaisseur (D) de la pièce polaire (15d ; 15c) dans la direction longitudinale (LR) de la tige d'entraînement (14).

3. Dispositif d'entraînement selon l'une quelconque des revendications précédentes, comprenant en outre
un élément magnétique doux ou permanent supplémentaire (20) qui est disposé à une distance prédéterminée de la pièce polaire (15d) et de l'élément magnétique doux ou permanent (16c) au niveau de la tige d'entraînement (14), et
un élément magnétique doux supplémentaire (21) qui entoure l'élément magnétique doux ou permanent supplémentaire (20).

4. Dispositif d'entraînement selon l'une quelconque des revendications précédentes, dans lequel le boîtier (11) est configuré de telle sorte qu'il soit étanchéifié vis-à-vis de l'entrée de liquide et/ou de gaz depuis l'extérieur.

5. Dispositif d'entraînement selon la revendication 3, dans lequel l'élément magnétique doux ou permanent (16c), les deux pièces polaires (15d, 15c) et l'élément magnétique doux ou permanent supplémentaire (20) sont disposés avec une symétrie axiale par rapport à la tige d'entraînement (14) sur la tige d'entraînement (14) .

6. Dispositif d'entraînement selon l'une quelconque des revendications précédentes, comprenant en outre un dispositif de mesure (13a, 13b) pour la mesure d'un mouvement de translation effectué par la tige entraînement (14) dans le boîtier (11), le dispositif de mesure (13a, 13b) étant disposé au niveau d'une extrémité de la tige entraînement (14) opposée à un accouplement au corps d'arrêt (33) .

7. Dispositif d'entraînement selon l'une quelconque des revendications précédentes, dans lequel le boîtier (11) est en outre configuré pour recevoir un dispositif de réglage (12) pour le raccordement à une ligne de bus (23a, 23b) par le biais duquel le dispositif de réglage (12) peut recevoir des données pour la commande et/ou la régulation du dispositif d'entraînement (10).

8. Soupape (1) pour la commande d'un courant de gaz et/ou de liquide (40), comprenant un corps d'arrêt (33) déplaçable en translation, qui est accouplé à une tige d'entraînement (14) du dispositif d'entraînement (10) selon l'une quelconque des revendications précédentes, qui fait partie de la soupape, de telle sorte qu'un mouvement de translation de la tige entraînement (14) provoque un mouvement de translation du corps d'arrêt (33) pour ouvrir et fermer la soupape (1).
